# FASCICULE DE BREVET EUROPEEN

(11) **EP 0 574 280 B1**
(45) Date de publication et mention de la délivrance du brevet: **27.11.1996**
(21) Numéro de dépôt: 93401276.6
(22) Date de dépôt: 18.05.1993
(51) Int. Cl.: C04B 35/14

(54) **Procédé de production d'un matériau réfractaire en silice vitreuse frittée**
Verfahren zur Herstellung von einem feuerfestem gesintertem Kieselglasgegenstand
Process for the production of a sintered refractory vitreous silica material

(30) Priorité: 22.05.1992 FR 9206276
(43) Date de publication de la demande: 15.12.1993
(73) Titulaire: SOCIETE EUROPEENNE DES PRODUITS REFRACTAIRES, F-92400 Courbevoie (FR)
(72) Inventeur: Guigonis, Jacques Marius Louis, F-84320 Entraigues sur Sorgues (FR); Jorge, Eric Thierry Georges, F-84000 Avignon (FR)
(74) Mandataire: Colas, Jean-Pierre

(56) Documents cités:
- WO-A-91/12216
- US-A- 4 297 309
- US-A- 4 506 025
- US-A- 4 929 579
- DATABASE WPIL Week 8744, Derwent Publications Ltd., London, GB; AN 87-309515

## Description

L'invention concerne un nouveau procédé de production d'un matériau réfractaire en silice vitreuse frittée, un nouveau mélange de grains et particules de silice vitreuse et un nouveau matériau en silice vitreuse frittée.

Les pièces en silice vitreuse frittée sont utiles dans des applications nécessitant l'emploi d'un matériau réfractaire ayant un faible coefficient de dilatation, une faible conductivité thermique et une bonne inertie chimique.

A ce jour des pièces en silice vitreuse frittée sont utilisées industriellement :
∗ en métallurgie, surtout en métallurgie des non-ferreux comme par exemple en fonderie des alliages d'aluminium, du laiton et du bronze (goulottes de coulée, busettes, louches, creusets), du zinc (protection des thermocouples), et du magnésium (blocs de cellule d'électrolyse) ;
∗ en chimie, pour la fabrication du titane et en pétrochimie (pièces pour tubes d'échangeur à chlore) ; en équipements de laboratoire ; en revêtement anti-acide ;
∗ en éléments de four tels que les rouleaux de fours de traitement thermique en verrerie et en sidérurgie ;
∗ en pièces de moule pour composites thermoformables ou plateaux de formage de tôles fines ;
∗ en verrerie, par exemple pour la réalisation de registres de fours à verre "flotté", de pièces consommables tant pour les fours à verre sodocalcique que pour les fours à verres spéciaux (par exemple comme poinçons, agitateurs, chemises, cuvettes), et comme blocs de cuve pour fours à verres optiques. L'emploi de silice frittée est avantageux dans le domaine verrier du fait de sa faible dilatation thermique qui la rend résistante aux chocs thermiques et du fait que, au contact des verres fondus, la silice se corrode mais n'entraîne pas de défauts, tels que pierres ou cordes, dans le verre, car elle est "digérée" par celui-ci dont elle est l'un des principaux constituants. Cet emploi est toutefois limité par sa résistance relativement faible à la corrosion par les verres fondus.

Le procédé classique de production de pièces en silice vitreuse frittée met en jeu le coulage d'une barbotine (mélange fluide aqueux) de particules de silice vitreuse dans un moule en plâtre dont la porosité permet l'élimination par succion capillaire de la plus grande partie de l'eau contenue dans la barbotine et une rigidification ou prise de la pièce coulée permettant son démoulage. La pièce coulée est ensuite mûrie, séchée et frittée par cuisson à haute température, par exemple vers 1100-1150°C. Après refroidissement la pièce obtenue peut être usinée.

La barbotine utilisée dans ce procédé présente, toutefois, le défaut de nécessiter un long temps de préparation. Typiquement, on part de grains de silice vitreuse fondue qu'on broie finement en milieu humide, par exemple dans un broyeur à boulets, puis on incorpore à la suspension résultante de fines particules (1O-40µm environ) diverses fractions granulométriques plus grossières de silice vitreuse fondue jusqu'à obtention d'une suspension homogène. Il faut alors "stabiliser" cette suspension produite en milieu humide en l'agitant en permanence dans une cuve pendant une durée de 8-13 jours. Cette longue opération de stabilisation est indispensable pour obtenir un comportement rhéologique stable de la suspension ou barbotine. En son absence, on rencontre des problèmes lors du coulage de la barbotine, tels que formation de retassures et texture hétérogène, qui ont pour effet de conduire à un matériau final présentant après cuisson des propriétés dégradées.

Typiquement, les matériaux en silice vitreuse frittée obtenus par le procédé ci-dessus ont une masse volumique de 1,9 T/m³, une porosité ouverte de 12-13%, un coefficient de dilatation thermique de 0,6 x 10⁻⁶/K, et un module de rupture de 12-20 MPa.

Il existe donc un besoin pour un procédé de production d'un matériau réfractaire en silice vitreuse frittée qui soit plus aisé et moins laborieux à mettre en oeuvre, tout en produisant un matériau à propriétés non dégradées, et même améliorées.

L'invention a pour objet de fournir un tel procédé.

Plus précisément l'invention concerne un procédé de production d'un article réfractaire en silice vitreuse frittée comprenant les étapes consistant à couler un mélange fluide d'eau et de particules de silice vitreuse dans un moule poreux, à laisser s'éliminer la plus grande partie de l'eau contenue dans le mélange coulé à travers les pores dudit moule de façon que la pièce coulée dans le moule se solidifie, à extraire la pièce solidifiée du moule, à sécher cette pièce, et à fritter la pièce séchée à haute température, caractérisé en ce qu'on prépare le mélange fluide comme suit :
A) on prépare un mélange des grains et particules de silice vitreuse fondue en mélangeant à sec :
   (i) une fraction granulométrique modérément grossière de silice vitreuse fondue, dont au moins 80% en poids des grains sont compris entre 40 µm et 1 mm,
   (ii) une fraction granulométrique fine de silice vitreuse fondue, dont au moins 95% en poids des grains sont inférieurs à 40 µm, lesdits grains de silice (ii) ayant une surface spécifique BET de 6 à 9 m²/g et un diamètre médian par sédigraphie de 5 à 6 µm ;
   (iii) des particules sensiblement sphériques d'une fumée de silice autre que les fumées de silice provenant de la fabrication des ferro-siliciums et du silicium, et
   (iv) facultativement, au moins une fraction granulométrique de silice vitreuse fondue plus grossière que la fraction (i), les constituants (i), (ii), (iii) et (iv) étant utilisés dans les proportions pondérales suivantes, par rapport au poids total de (i) + (ii) + (iii) + (iv) : (i) 15-70%, (ii) 15-55%, (iii) 3-15% et (iv) 0-52%, et les constituants (i), (ii) et (iv) étant constitués d'une silice vitreuse fondue contenant au moins 99% de silice,
B) on prépare un mélange fluide à partir du mélange obtenu en (A) et d'une quantité d'eau représentant au plus 10% en poids par rapport au poids total du mélange obtenu en (A).

Le mélange fluide ainsi produit est utilisable immédiatement et ne requiert pas d'opération de stabilisation, ce qui est très avantageux.

On peut diviser les mélanges fluides en deux catégories, selon qu'ils contiennent ou non l'ingrédient optionnel (iv).

Les mélanges fluides sans ingrédient (iv) peuvent être utilisés comme barbotine dans un procédé de coulée de barbotine classique où l'élimination de l'eau s'opère par un effet de succion capillaire à travers les pores du moule poreux, habituellement en plâtre. Dans ce cas le mélange fluide contiendra habituellement 8 à 10% d'eau. Par ailleurs, les mélanges fluides comprenant l'ingrédient (iv) peuvent être employés dans un processus de coulée dans un moule poreux avec application de vibrations (vibrocoulée) visant à améliorer le remplissage du moule et où l'élimination de l'eau s'opère principalement par évaporation. Dans ce cas le mélange fluide contiendra habituellement une quantité d'eau moindre que dans le cas précédent, à savoir une quantité de l'ordre de 5 à 7%.

L'invention concerne également un mélange de grains et particules de silice vitreuse fondue, caractérisé en ce qu'il est produit en mélangeant à sec :
(i) une fraction granulométrique modérément grossière de silice vitreuse fondue dont au moins 80% en poids des grains sont compris entre 40 µm et 1 mm,
(ii) une fraction granulométrique fine de silice vitreuse fondue, dont au moins 95% en poids des grains sont inférieurs à 40 µm, lesdits grains de silice (ii) ayant une surface spécifique BET de 6 à 9 m²/g et un diamètre médian par sédigraphie de 5 à 6 µm ;
(iii) des particules sensiblement sphériques d'une fumée de silice autre que les fumées de silice provenant de la fabrication des ferro-siliciums et du silicium ;
(iv) facultativement, au moins une fraction granulométrique de silice vitreuse fondue plus grossière que la fraction (i), les constituants (i), (ii), (iii) et (iv) étant utilisés dans les proportions pondérales suivantes, par rapport au poids total de (i) + (ii) + (iii) + (iv) : (i) 15-70%, (ii) 15-55%, (iii) 3-15% et (iv) 0-52%, et les constituants (i), (ii) et (iv) étant constitués d'une silice vitreuse fondue contenant au moins 99% de silice.

Avantageusement, on utilise les ingrédients (i), (ii), (iii) et (iv) dans les pourcentages suivants, selon que l'on veut produire une barbotine ou un mélange fluide à vibrocouler.

| ingrédients | barbotine | | mélange à vibrocouler | |
|---|---|---|---|---|
| | large | préféré | large | préféré |
| (i) | 30-70 | 40-60 | 15-35 | 20-30 |
| (ii) | 15-55 | 27-40 | 15-35 | 20-30 |
| (iii) | 3-15 | 7-13 | 3-15 | 7-13 |
| (iv) | - | - | 27-52 | 33-47 |

De préférence, la grosseur des grains de la ou les fractions granulométriques (iv) n'excède pas 10 mm.

L'invention concerne, en outre, un nouveau matériau réfractaire formé de grains de silice vitreuse fondue frittés, caractérisé en ce qu'il contient, en outre, des particules sensiblement sphériques de fumée de silice visibles sous forme d'entités distinctes dispersées sur une microphotographie, les grains de silice vitreuse fondue contenant au moins 99% de silice, et la fumée de silice étant une fumée de silice autre que les fumées de silice provenant de la fabrication des ferro-siliciums et du silicium.

Il faut veiller au cours de la fabrication de l'article réfractaire à introduire le moins possible d'éléments se comportant comme des fondants pour la silice ou d'éléments (appelés "minéralisateurs") susceptibles de promouvoir la dévitrification de la silice vitreuse en cristobalite, car cette dernière présente une anomalie de dilatation thermique au refroidissement à une température de 200 à 230°C qui entraîne la rupture des articles. Des exemples de tels éléments sont Al₂O₃, Fe₂O₃, des composés des métaux alcalins (tels que Na₂O et K₂O) et des métaux alcalino-terreux (tels que CaO).

Il faut veiller également à exclure le plus possible les éléments, tels que SiC et le carbone, qui provoquent un bullage du matériau au contact des verres fondus.

On utilisera, donc, avantageusement des grains de silice vitreuse fondue ayant une teneur en silice d'au moins 99% en poids, de préférence d'au moins 99,5%.

Une analyse type de silice vitreuse fondue utilisable pour constituer les grains (i), (ii) et (iv) est la suivante, en % en poids : TiO₂ : < 0,05% ; Al₂O₃ : ≤ 0,2%; Fe₂O₃ : ≤ 0,03%; MgO : < 0,05% ; CaO : ≤ 0,02% ; Na₂O ≤ 0,05% ; K₂O :
≤ 0,01 ; et SiO₂ : le complément à 100%.

Pour ces mêmes raisons on évitera d'utiliser, comme ingrédient (iii) les fumées de silice provenant de la fabrication des ferro-siliciums et du silicium car ces fumées sont riches en Na₂O (0,3% en poids et plus), en SiC (> 0,2% en poids), en carbone (> 0,2% en poids) et en Fe₂O₃ (>0,15% en poids) et on ne connaît pas, à l'heure actuelle, de procédé permettant de les purifier efficacement. Ces fumées de silice, lorsqu'on tente de les utiliser dans le procédé de l'invention, donnent un matériau qui, en plus d'une coloration réduisant fortement sa valeur commerciale, est sujet au bullage au contact des verres fondus.

On a, par contre, trouvé que les fumées de silice produites au cours de la fusion et de la réduction du zircon en four électrique, par exemple comme décrit dans FR-A 1 191 665, convenaient bien pour le procédé de l'invention.

Ces fumées de silice sont formées de particules sensiblement sphériques, présentent l'analyse-type suivante, en % en poids
ZrO₂ = 1,3-2,5%
Al₂O₃ = 2,1-3%
Fe₂O₃ = 0,10-0,16%
Na₂O = 0,09-0,16%
K₂O = 0,05-0,07%
CaO = 0,01-0,06%
TiO₂ = 0,01-0,02%
C < 0,015%
SiC : non mesurable (c'est-à-dire moins de 0,01%)
SiO₂ ≃ 95% (par différence);
ont une masse volumique d'environ 2,2 tonnes/m³, une surface spécifique BET de 12 à 18 m²/g environ, et un diamètre médian par sédigraphie des particules de 0,2 à 0,6 µm. Moins de 30% des particules de ces fumées de silice ont un diamètre supérieur à 1 µm, mais il peut arriver que quelques particules s'agglomèrent en amas de plusieurs micromètres.

L'eau utilisée pour la préparation du mélange fluide sera avantageusement une eau déminéralisée, toujours pour réduire l'introduction d'impuretés néfastes et minimiser le risque de dévitrification.

La production des divers grains (i) et (ii) de silice vitreuse fondue s'effectue avantageusement par broyage à sec de silice fondue concassée disponible dans le commerce, par exemple dans des broyeurs à boulets dont les parois sont revêtues d'un matériau réfractaire protecteur, par exemple à base d'alumine ou du type dit AZS (alumine - zircone - silice) ou d'un autre doublage protecteur et dont les éléments broyants sont en un matériau visant à limiter la pollution, notamment par le fer, du produit broyé. Les propriétés définies pour les grains fins (ii) sont typiques de grains produits par broyage à sec.

La présence des deux fractions granulométriques (i) et (ii) combinée à celle de la fumée de silice (iii) permet de maximaliser la masse volumique du matériau final grâce à la compacité de l'arrangement des grains et des particules de fumée de silice.

A titre indicatif, on peut utiliser comme grains (i), une fraction granulométrique présentant la distribution suivante :

| Ouverture du tamis en µm | Refus cumulés (en % en poids) | |
|---|---|---|
| | Minimum | Maximum |
| 1000 | 0 | 5 |
| 500 | 5 | 15 |
| 200 | 30 | 50 |
| 100 | 60 | 80 |
| 40 | 80 | 95 |

La présence de la fumée de silice a, par ailleurs, pour effet, de façon surprenante, de renforcer la résistance à la corrosion des parties du matériau fritté final constituées par la fraction fine et permet, en quelque sorte, de plus ou moins uniformiser des résistances à la corrosion des parties du matériau issues de la fraction grossière (qui sont normalement plus résistantes) et des parties issues de la fraction fine (qui sont normalement plus facilement attaquées). En outre, l'emploi de la fumée de silice permet de minimiser la quantité d'eau requise pour la préparation du mélange fluide, ce qui réduit le temps de prise de l'article coulé et permet, par conséquent, un démoulage plus rapide.

Il est à noter que, de façon remarquable, les particules de la fumée de silice demeurent sous forme d'entités discrètes identifiables sur des microphotographies du matériau fritté final, qu'il soit nouvellement fabriqué ou après usage. Ces particules disséminées dans le matériau, retiennent leurs constituants mineurs caractéristiques, tels que Al₂O₃ et ZrO₂, comme s'ils ne diffusaient pas dans la masse du matériau. Ces constituants mineurs ne sont donc pas critiques vis-à-vis des phénomènes de dévitrification.

Outre les ingrédients essentiels et optionnels susmentionnés, on peut inclure dans le mélange fluide une petite quantité, habituellement 0,05 à 1% en poids par rapport au poids total du mélange fluide, d'un agent tensio-actif dans le but de modifier ses propriétés rhéologiques. Cet agent tensio-actif doit être exempt de sodium et on peut, par exemple, utiliser un composé d' ammonium tensio-actif tel qu'un polycarboxylate d'ammonium ou un polyacrylate d'ammonium.

Un exemple spécifique d'un tel agent tensio-actif est le produit DISPEX^{(R)} A40 vendu par la Société ALLIED COLLOIDS.

Les exemples non limitatifs suivants sont donnés dans le but d'illustrer l'invention.

La fumée de silice employée dans les exemples provenait d'un processus de fusion et de réduction de zircon et titrait, en % en poids, SiO₂ : ≃ 95%, ZrO₂ : 2,1%, Al₂O₃ : 2,3%, Fe₂O₃ : 0,15%, Na₂O : 0,1%, CaO : 0,01%, K₂O : 0,06%, TiO₂ : 0,015%, C = 0,0105%, et SiC : non mesurable (c'est-à-dire moins de 0,01%).

La silice vitreuse formant les grains (i) et (ii) titrait 99,5% en poids de silice. La fraction (ii) a été préparée par broyage à sec d'une fraction plus grossière (2-4,76 mm) de grains de silice vitreuse jusqu'à obtention de la fraction (ii). Le broyeur utilisé était un broyeur à boulets d'alumine comportant des parois internes revêtues d'un matériau électrofondu du type alumine-zircone-silice.

### EXEMPLE 1

On a préparé des pièces consommables pour l'industrie verrière, telles que rondelles d'écoulement, chemises, plongeurs, par coulage en moule en plâtre d'une barbotine formée, en poids, de :
grains (40-1000 µm) de silice = 54%
grains (< 40 µm) de silice vitreuse = 33%
fumée de silice = 13%
avec ajout de 0,09% de dispersant "DISPEX A40" et 9% d'eau déminéralisée.

Cette fabrication s'effectue de la façon suivante :

On a prémélangé à sec les trois composants, puis on les a introduit progressivement dans un mélangeur à palette dans lequel se trouvait l'eau déminéralisée et le dispersant de façon à former une suspension ou barbotine.

Cette barbotine a été ensuite dégazée sous vide (opération souhaitable mais non obligatoire) avant son coulage dans des moules en plâtre munis d'entonnoirs de remplissage et adaptés à la forme des pièces à obtenir.

On a laissé durcir ces pièces, puis on les a séchées dans une étuve ventilée à 200°C et enfin disposées dans un four et cuites à 1050°C afin de les fritter.

Caractéristiques du produit fritté cuit :
Masse volumique : 1,910 T/m³
Porosité ouverte : 13%
Résistance à la flexion : 20 MPa
Coefficient de dilatation : 0,6* 10⁻⁶/K

Analyse chimique :
Al₂O₃ ≤ à 1%
ZrO₂ ≤ à 1%
Fe₂O₃ ≤ à 0,05%
CaO ≤ à 0,05%
Na₂O ≤ à 0,05%
autres = traces
SiO₂ : le complément à 100%

Analyse cristallographique :
Cristobalite ≤ à 2%

La microstructure de ces nouveaux produits est nouvelle et caractéristique.

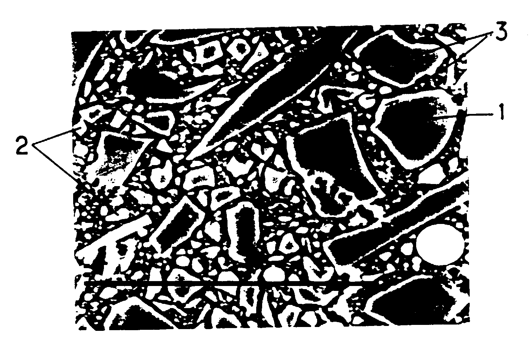

La figure unique, qui est une microphotographie faite à un grossissement d'environ 800 X d'un échantillon poli d'un matériau selon l'invention, révèle l'existence de gros grains 1 de silice vitreuse liés par une dispersion relativement continue de grains plus fins 2 et de particules sphériques 3 de fumées de silice.

Les articles de l'exemple 1 étant destinés à venir au contact de verres fondus, on a effectué sur eux divers essais mentionnés ci-dessous, en les comparant à des articles similaires du commerce dont les caractéristiques sont :
Masse volumique : 1,900 T/m³
Porosité ouverte : 13%
Résistance à la flexion : 12 à 20 MPa
Coefficient de dilatation : 0,6*10⁻⁶ /K
Analyse chimique :
   SiO₂ ≥ 99,5%
   Al₂O₃ = 0,2%
   Fe₂O₃ = 0,03%
   CaO = 0,05%
   Na₂O = 0,05%
   TiO₂ = 0,03
   MgO = 0,01
Analyse cristallographique :
   Cristobalite ≤ à 2%

* Comportement au contact d'un verre socalcique :
   - Indice de bullage : (1 heure à 1100°C et 1 heure à 1350°C) - selon la méthode décrite par A. AUERBACH dans les Comptes Rendus du Symposium sur l'Elaboration du verre, MADRID, 11-14 Septembre 1973, page 259-312.
      Produit de l'invention : 1 et 1
      Produit de référence : 1 et 1
   - Indice de lacher de pierres (1300°C pendant 24 heures)
      Produit de l'invention : 0
      Produit de référence : 0
      Cet indice de lacher de pierres est réalisé en utilisant l'essai dit "T-test" décrit par A. AUERBACH en Octobre 1972 au Vortrag in Fachausschuss 2 der DGG, FRANKFURT-AM-MEIN.
   - Indice de corrosion dynamique (à 1250°C pendant 24 heures et à 1250°C pendant 48 heures)
      Produit de l'invention : 120
      Produit de référence : 100
      Cet indice de corrosion dynamique est réalisé en utilisant l'essai dit de PILKINGTON, décrit par A. AUERBACH en Octobre 1972, référence ci-dessus.
* Comportement au contact de verres borosilicatés :
   - Indice de bullage à 1350° pendant 1 heure
      Produit de l'invention : 2-3
      Produit de référence : 7
   - Indice de lacher de pierres (1300°C pendant 1 heure) :
      Produit de l'invention : 0
      Produit de référence : 1
* Comportement au contact de verre opale au fluor :

Dans les mêmes conditions, le produit selon l'invention présente un très bon comportement au test de bullage et de lacher de pierres (indice 0) au contact de verres opales au fluor.

Il est à noter que la barbotine de l'exemple 1 peut être également coulée dans des moules disposés sur une table vibrante, avec l'avantage que dans ce cas la quantité d'eau à incorporer à la barbotine peut être réduite à moins 8% en poids.

### EXEMPLE 2

Selon le même mode opératoire que dans l'exemple 1 on a préparé une grosse pièce dont l'épaisseur est supérieure à 100 mm, à savoir un registre de four pour la fabrication du verre flotté, à partir d'un mélange fluide de la composition pondérale suivante :
grains de silice vitreuse (2 à 4,76 mm) = 16%
grains de silice vitreuse (0,84 à 2 mm) = 27%
grains de silice vitreuse (40 µm à 1 mm) = 25%
grains de silice vitreuse (< à 40 µm) = 25%
fumée de silice = 7%
avec ajout de 0,09% de dispersant DISPEX A40 et 6% d'eau déminéralisée.

La seule différence par rapport à l'exemple 1 est que dans ce cas le mélange fluide a été coulé dans des moules disposés sur une table vibrante soumise à des vibrations (100 Hertz) pendant 6 minutes.

Après cuisson, les caractéristiques de l'article étaient les suivantes :
Masse volumique : 1,960 à 2,000 T/m³
Porosité ouverte : 9-10%
Résistance à la flexion à 20°C : 14-20MPa
Coefficient de dilatation : 0,6*10⁻⁶K⁻¹
Analyse chimique :
   Al₂O₃ ≤ 1%
   ZrO₂ ≤ 1%
   Fe₂O₃ ≤ 0,05%
   CaO ≤ 0,05%
   Na₂O ≤ 0,05%
   autres : traces
   SiO₂ : le complément à 100%
Analyse cristallographique :
Cristobalite ≤ 2%

Le matériau de cet article présente le même comportement que celui de l'exemple 1 aux essais de bullage et de lacher de pierres. En essai de corrosion dynamique au contact du verre sodocalcique à 1250°C on a observé :
Matériau de l'ex. 2 = 130
Matériau de l'ex. 1 = 120
Matériau de référence = 100

Le matériau de l'exemple 2 présente la même microstructure typique que celui de l'exemple 1.

Par ailleurs, fait surprenant, dans les essais de pièces consommables au contact des verres décrits ci-dessus il s'est avéré que les pièces de référence après utilisation à chaud se fissurent totalement au refroidissement lors du remplacement de ces pièces ce qui rend délicate leur manipulation, alors que les pièces selon l'invention ne présentent pas cette fissuration et leur manipulation est aisée.

Ce phénomène est dû à la dévitrification importante des pièces de référence. Ces essais montrent que les impuretés majeures apportées par la fumée de silice utilisée dans l'invention, notamment l'oxyde d'aluminium et l'oxyde de zirconium ne sont pas critiques vis-à-vis des phénomènes de dévitrification et confirment le fait que ces impuretés diffusent très peu dans la masse de la pièce.

### EXEMPLE 3 (comparatif)

Afin de vérifier si la qualité de la fumée de silice introduite était critique, nous avons essayé de réaliser trois essais répétant les exemples 1 et 2, mais en utilisant
a/ une fumée de silice du commerce provenant de la réduction du ferro-silicium
b/ de la silice colloidale
c/ de la silice fondue broyée.

a) on a utilisé une silice thermique de type ferrosilicium du commerce dont l'analyse chimique (%) est :
   SiO₂ = 94-98%
   Al₂O₃ = 0,1-0,3%
   SiC = 0,2-0,7
   Fe₂O₃ = 0,15 - 0,4
   Na₂O = 0,3-0,5
   CaO = 0,1-0,3
   K₂O = 0,2-0,6
   TiO₂ = 0,01-0,02
   C = 0,2-1,3
   Surface spécifique BET = environ 35 m²/g
   Diamètre médian par sédigraphie = 0,25 à 0,30 µm.

On a constaté que la quantité d'eau de mise en oeuvre devait être augmentée d'environ 1% par rapport aux quantités indiquées dans les exemples selon l'invention et que les pièces après cuisson étaient colorées en rose, fissurées et avaient une masse volumique plus faible (1,8 T/m³).

Un test de bullage effectué selon la méthode indiquée a donné un indice très élevé : 9-10.

Nous estimons donc que l'utilisation de ce type de fumée de silice en l'état est rédhibitoire. Cependant, il va de soi que si des traitements de purification permettaient de réduire voire d'éliminer les éléments du type SiC et C, sans modifier la forme microsphérique des particules, cette fumée pourrait devenir utilisable dans l'invention.
b) On a utilisé une silice colloïdale du commerce de marque LUDOX^{(R)} vendue par E.I. DU PONT DE NEMOURS, du type AS40 stabilisée à l'ammonium et contenant 40% de silice ayant un diamètre de particules de 21 nm.

La substitution totale de la fumée de silice par cette silice colloïdale n'est pas envisageable car il faudrait dans l'ex. 1 introduire 32,5% de silice colloïdale (soit 13% de SiO₂ et 19,5% d'eau) ce qui conduirait à un excès d'eau dans le mélange.

De même, dans l'ex. 2 il faudrait introduire 17,5% de silice colloïdale (7% de SiO₂ et 10,5% d'eau).

L'association de fumée de silice avec la silice colloïdale, par ex. 6% de fumée de silice selon l'invention avec 3 à 7% de silice colloïdale est plus réaliste, mais cela conduit pour un pourcentage de 7% de silice colloïdale à des mélanges à viscosité élevée qu'il est difficile de dégazer et qui, au séchage, donnent une microfissuration des pièces.
c) Le remplacement de la fumée de silice par de la silice fondue broyée ou microbroyée à la même granulométrie a conduit à des pièces après cuisson n'ayant pas les caractéristiques physiques de l'invention à savoir faible masse volumique (1,7 T/m³) et très faible résistance à la flexion (< 5MPa) à 20°C.

Le matériau de l'invention constitue un matériau de choix pour toutes les applications où on emploie de la silice vitreuse frittée.

Il va de soi que les modes de réalisation décrits ne sont que des exemples et l'on pourrait les modifier, notamment par substitution d'équivalents techniques, sans sortir pour cela du cadre de l'invention.

## Revendications

1. Un procédé de production d'un article réfractaire en silice vitreuse frittée comprenant les étapes consistant à couler un mélange fluide d'eau et de particules de silice vitreuse dans un moule poreux, à laisser s'éliminer la plus grande partie de l'eau contenue dans le mélange coulé à travers les pores dudit moule de façon que la pièce coulée dans le moule se solidifie, à extraire la pièce solidifiée du moule, à sécher cette pièce, et à fritter la pièce séchée à haute température, caractérisé en ce qu'on prépare le mélange fluide comme suit :
A) on prépare un mélange des grains et particules de silice vitreuse fondue en mélangeant à sec :
(i) une fraction granulométrique modérément grossière de silice vitreuse fondue, dont au moins 80% en poids des grains sont compris entre 40 µm et 1 mm,
(ii) une fraction granulométrique fine de silice vitreuse fondue, dont au moins 95% en poids des grains sont inférieurs à 40 µm, lesdits grains de silice (ii) ayant une surface spécifique BET de 6 à 9 m²/g et un diamètre médian par sédigraphie de 5 à 6 µm ;
(iii) des particules sensiblement sphériques d'une fumée de silice autre que les fumées de silice provenant de la fabrication des ferro-siliciums et du silicium, et
(iv) facultativement, au moins une fraction granulométrique de silice vitreuse fondue plus grossière que la fraction (i), les constituants (i), (ii), (iii) et (iv) étant utilisés dans les proportions pondérales suivantes, par rapport au poids total de (i) + (ii) + (iii) + (iv) : (i) 15-70%, (ii) 15-55%, (iii) 3-15% et (iv) 0-52%, et les constituants (i), (ii) et (iv) étant constitués d'une silice vitreuse fondue contenant au moins 99% de silice,
B) on prépare un mélange fluide à partir du mélange obtenu en (A) et d'une quantité d'eau représentant au plus 10% en poids par rapport au poids total du mélange obtenu en (A).

2. Un procédé selon la revendication 1, caractérisé en ce que la silice de fumée comprend, en poids, au plus 2,5% de ZrO₂, au plus 3% de Al₂O₃, au plus 0,16% de Fe₂O₃, au plus 0,16% de Na₂O, au plus 0,07% de K₂O, au plus 0,06% de CaO, au plus 0,02% de TiO₂, moins de 0,015% de C, et du SiO₂ pour le complément à 100%.

3. Un procédé selon la revendication 1 ou 2, caractérisé en ce que (i) est présent à raison de 30-70%, (ii) de 15-55%, (iii) de 3-15%, et (iv) est absent.

4. Un procédé selon la revendication 3, caractérisé en ce que (i) est présent à raison de 45-60%, (ii) de 27-40% et (iii) de 7-13%.

5. Un procédé selon la revendication 1 ou 2, caractérisé en ce que (i) est présent à raison de 15-35%, (ii) de 15-35%, (iii) de 3-15%, et (iv) 27-52%.

6. Un procédé selon la revendication 5, caractérisé en ce que (i) est présent à raison de 20-30%, (ii) de 20-30%, (iii) de 7-13% et (iv) de 33-47%.

7. Un procédé selon la revendication 1, 2, 4 ou 5, caractérisé en ce que la grosseur des grains (iv) n'excède pas 10 mm.

8. Un procédé selon l'une quelconque des revendications 1 à 7, caractérisé en ce que le mélange fluide comprend aussi un agent tensio-actif.

9. Matériau réfractaire formé de grains de silice vitreuse fondue frittés, caractérisé en ce qu'il contient, en outre, des particules sensiblement sphériques de fumée de silice visibles sous forme d'entités distinctes dispersées sur une microphotographie, les grains de silice vitreuse fondue contenant au moins 99% de silice, et la fumée de silice étant une fumée de silice autre que les fumées de silice provenant de la fabrication des ferrosiliciums et du silicium.

10. Matériau selon la revendication 9, caractérisé en ce qu'il contient 3 à 15% en poids de particules de fumée de silice.

11. Matériau selon la revendication 9 ou 10, caractérisé en ce que la silice de fumée comprend, en poids, au plus 2,5% de ZrO₂, au plus 3% de Al₂O₃, au plus 0,16% de Fe₂O₃, au plus 0,16% de Na₂O, au plus 0,07% de K₂O, au plus 0,06% de CaO, au plus 0,02% de TiO₂, moins de 0,015% de C, et du SiO₂ pour le complément à 100%.

12. Matériau selon la revendication 9, 10 ou 11, caractérisé en ce qu'il présente une teneur en cristobalité d'au plus 2% en poids.

13. Matériau selon l'une quelconque des revendications 9 à 12, caractérisé en ce qu'il présente un indice de bullage inférieur ou égal à 3.

14. Matériau selon l'une quelconque des revendications 9 à 13, caractérisé en ce qu'il présente l'analyse suivante, en % en poids : Al₂O₃ ≤ 1%, ZrO₂ ≤ 1%, Fe₂O₃ ≤ 0,05%, CaO ≤ 0,05%, Na₂O ≤ 0,05%, autres : traces, le complément à 100% étant formé de SiO₂.

15. Mélange de grains et particules de silice vitreuse fondue, caractérisé en ce qu'il est produit en mélangeant à sec :
(i) une fraction granulométrique modérément grossière de silice vitreuse fondue dont au moins 80% en poids des grains sont compris entre 40 µm et 1 mm,
(ii) une fraction granulométrique fine de silice vitreuse fondue, dont au moins 95% en poids des grains sont inférieurs à 40 µm, lesdits grains de silice (ii) ayant une surface spécifique BET de 6 à 9 m²/g et un diamètre médian par sédigraphie de 5 à 6 µm ;
(iii) des particules sensiblement sphériques d'une fumée de silice autre que les fumées de silice provenant de la fabrication des ferro-siliciums et du silicium ;
(iv) facultativement, au moins une fraction granulométrique de silice vitreuse fondue plus grossière que la fraction (i), les constituants (i), (ii), (iii) et (iv) étant utilisés dans les proportions pondérales suivantes, par rapport au poids total de (i) + (ii) + (iii) + (iv) : (i) 15-70%, (ii) 15-55%, (iii) 3-15% et (iv) 0-52%, et les constituants (i), (ii) et (iv) étant constitués d'une silice vitreuse fondue contenant au moins 99% de silice.

16. Mélange selon la revendication 15, caractérisé en ce que la silice de fumée comprend, en poids, au plus 2,5% de ZrO₂, au plus 3% de Al₂O₃, au plus 0,16% de Fe₂O₃, au plus 0,16% de Na₂O, au plus 0,07% de K₂O, au plus 0,06% de CaO, au plus 0,02% de TiO₂, moins de 0,015% de C, et du SiO₂ pour le complément à 100%.

17. Un mélange selon la revendication 15 ou 16, caractérisé en ce que (i) est présent à raison de 30-70%, (ii) de 15-55%, (iii) de 3-15%, et (iv) est absent.

18. Un mélange selon la revendication 17, caractérisé en ce que (i) est présent à raison de 45-60%, (ii) de 27-40% et (iii) de 7-13%.

19. Un mélange selon la revendication 15 ou 16, caractérisé en ce que (i) est présent à raison de 15-35%, (ii) de 15-35%, (iii) de 3-15%, et (iv) 27-52%.

20. Un mélange selon la revendication 19, caractérisé en ce que (i) est présent à raison de 20-30%, (ii) de 20-30%, (iii) de 7-13% et (iv) de 33-47%.

## Patentansprüche

1. Verfahren zur Herstellung eines feuerfesten Gegenstandes aus gesintertem Quarzglas, umfassend die aus dem Gießen einer flüssigen Mischung aus Wasser und Quarzglas-Teilchen in eine poröse Form, dem Eliminierenlassen des größten Teils des in der gegossenen Mischung enthaltenen Wassers durch die Poren der Form in der Weise, daß das in die Form gegossene Stück sich verfestigt, dem Herausnehmen des verfestigten Stücks aus der Form, dem Trocknen des Stücks und dem Sintern des getrockneten Stücks bei hoher Temperatur bestehenden Schritte, dadurch gekennzeichnet, daß man die flüssige Mischung wie folgt herstellt:
(A) man stellt eine Mischung aus geschmolzenen Quarzglas-Körnern und -Teilchen her, indem man:
(i) eine granulometrisch mäßig grobe Fraktion von geschmolzenem Quarzglas, wobei wenigstens 80 Gew.-% der Körner zwischen 40 µm und 1 mm liegen,
(ii) eine granulometrisch feine Fraktion von geschmolzenem Quarzglas, wobei wenigstens 95 Gew.-% der Körner kleiner als 40 µm sind, wobei die Siliciumdioxid-Körner (ii) eine spezifische BET-Oberfläche von 6 bis 9 m²/g und einen durch Sedigraphie bestimmten mittleren Durchmesser von 5 bis 6 µm aufweisen;
(iii) ungefähr kugelförmige Teilchen aus einem Quarzstaub, der anders als die aus der Herstellung von Ferrosilicium und Silicium stammenden Quarzstäube ist, und
(iv) gegebenenfalls mindestens eine granulometrische Fraktion von geschmolzenem Quarzglas, die gröber als die Fraktion (i) ist,
trocken vermischt, wobei die Bestandteile (i), (ii), (iii) und (iv) mit den folgenden Gewichtsanteilen, bezogen auf das Gesamtgewicht von (i) + (ii) + (iii) + (iv), verwendet werden: (i) 15 - 70 %, (ii) 15-55 %, (iii) 3 - 15 % und (iv) 0 - 52 %, und wobei die Bestandteile (i), (ii) und (iv) aus einem geschmolzenen Quarzglas bestehen, das mindestens 99 % Siliciumdioxid enthält,
B) man stellt aus der in (A) erhaltenen Mischung und einer Wassermenge, die mehr als 10 Gew.-%, bezogen auf das Gesamtgewicht der in (A) erhaltenen Mischung, darstellt, eine flüssige Mischung her.

2. Verfahren nach Anspruch 1, dadurch gekennzeichnet, daß der Quarzstaub, bezogen auf das Gewicht, höchstens 2,5 % ZrO₂, höchstens 3 % Al₂O₃, höchstens 0,16 % Fe₂O₃, höchstens 0,16 % Na₂O, höchstens 0,07 % K₂O, höchstens 0,06 % CaO, höchstens 0,02 % TiO₂, weniger als 0,015 % C und SiO₂ zur Ergänzung auf 100 % umfaßt.

3. Verfahren nach Anspruch 1 oder 2, dadurch gekennzeichnet, daß (i) mit einem Anteil von 30 - 70 %, (ii) mit einem Anteil von 15 - 55 %, (iii) mit einem Anteil von 3 - 15 % vorhanden ist und (iv) fehlt.

4. Verfahren nach Anspruch 3, dadurch gekennzeichnet, daß (i) mit einem Anteil von 45 - 60 %, (ii) mit einem Anteil von 27 - 40 % und (iii) mit einem Anteil von 7 - 13 % vorhanden ist.

5. Verfahren nach Anspruch 1 oder 2, dadurch gekennzeichnet, daß (i) mit einem Anteil von 15 - 35 %, (ii) mit einem Anteil von 15 - 35 %, (iii) mit einem Anteil von 3 - 15 % und (iv) mit einem Anteil von 27 - 52 % vorhanden ist.

6. Verfahren nach Anspruch 5, dadurch gekennzeichnet, daß (i) mit einem Anteil von 20 - 30 %, (ii) mit einem Anteil von 20 - 30 %, (iii) mit einem Anteil von 7 - 13 % und (iv) mit einem Anteil von 33 - 47 % vorhanden ist.

7. Verfahren nach Anspruch 1, 2, 4 oder 5, dadurch gekennzeichnet, daß die Größe der Körner (iv) 10 mm nicht überschreitet.

8. Verfahren nach einem der Ansprüche 1 bis 7, dadurch gekennzeichnet, daß die flüssige Mischung auch ein Tensid umfaßt.

9. Feuerfestes, aus geschmolzenen, gesinterten Quarzglas-Körnern gebildetes Material, dadurch gekennzeichnet, daß es außerdem ungefähr kugelförmige Teilchen aus einem Quarzstaub enthält, die in Form von unterschiedlichen, dispergierten Gebilden auf einer Mikrophotographie sichtbar sind, wobei die Körner aus geschmolzenem Quarzglas mindestens 99 % Siliciumdioxid enthalten und es sich bei dem Quarzstaub um einen Quarzstaub handelt, der anders als die aus der Herstellung von Ferrosilicium und Silicium stammenden Quarzstäube ist.

10. Material nach Anspruch 9, dadurch gekennzeichnet, daß es 3 bis 15 Gew.-% Quarzstaub-Teilchen enthält.

11. Material nach Anspruch 9 oder 10, dadurch gekennzeichnet, daß der Quarzstaub, bezogen auf das Gewicht, höchstens 2,5 % ZrO₂, höchstens 3 % Al₂O₃, höchstens 0,16 % Fe₂O₃, höchstens 0,16 % Na₂O, höchstens 0,07 % K₂O, höchstens 0,06 % CaO, höchstens 0,02 % TiO₂, weniger als 0,015 % C und SiO₂ zur Ergänzung auf 100 % umfaßt.

12. Material nach Anspruch 9, 10 oder 11, dadurch gekennzeichnet, daß es einen Cristobalitgehalt von höchstens 2 Gew.-% aufweist.

13. Material nach einem der Ansprüche 9 bis 12, dadurch gekennzeichnet, daß es einen Durchperl-Index von weniger als oder gleich 3 aufweist.

14. Material nach einem der Ansprüche 9 bis 13, dadurch gekennzeichnet, daß es die folgende Analyse - in Gew.-%-aufweist: Al₂O₃ ≤ 1 %, ZrO₂ ≤ 1 %, Fe₂O₃ ≤ 0,05 %, CaO ≤ 0,05 %, Na₂= ≤ 0,05 %, andere: Spuren, wobei SiO₂ die Ergänzung auf 100 % bildet.

15. Mischung aus Körnern und Teilchen aus geschmolzenem Quarzglas, dadurch gekennzeichnet, daß sie gebildet wird, indem:
(i) eine granulometrisch mäßig grobe Fraktion von geschmolzenem Quarzglas, wobei wenigstens 80 Gew.-% der Körner zwischen 40 µm und 1 mm liegen,
(ii) eine granulometrisch feine Fraktion von geschmolzenem Quarzglas, wobei wenigstens 95 Gew.-% der Körner kleiner als 40 µm sind, wobei die Siliciumdioxid-Körner (ii) eine spezifische BET-Oberfläche von 6 bis 9 m²/g und einen durch Sedigraphie bestimmten mittleren Durchmesser von 5 bis 6 µm aufweisen;
(iii) ungefähr kugelförmige Teilchen aus einem Quarzstaub, der anders als die aus der Herstellung von Ferrosilicium und Silicium stammenden Quarzstäube ist, und
(iv) gegebenenfalls mindestens eine granulometrische Fraktion von geschmolzenem Quarzglas, die gröber als die Fraktion (i) ist, trocken vermischt werden, wobei die Bestandteile (i), (ii), (iii) und (iv) mit den folgenden Gewichtsanteilen, bezogen auf das Gesamtgewicht von (i) + (ii) + (iii) + (iv), verwendet werden: (i) 15 - 70 %, (ii) 15 - 55 %, (iii) 3 - 15 % und (iv) 0 - 52 %, und wobei die Bestandteile (i), (ii) und (iv) aus einem geschmolzenen Quarzglas bestehen, das mindestens 99 % Siliciumdioxid enthält.

16. Mischung nach Anspruch 15, dadurch gekennzeichnet, daß der Quarzstaub, bezogen auf das Gewicht, höchstens 2,5 % ZrO₂, höchstens 3 % Al₂O₃, höchstens 0,16 % Fe₂O₃, höchstens 0,16 % Na₂O, höchstens 0,07 % K₂O, höchstens 0,06 % CaO, höchstens 0,02 % TiO₂, weniger als 0,015 % C und SiO₂ zur Ergänzung auf 100 % umfaßt.

17. Mischung nach Anspruch 15 oder 16, dadurch gekennzeichnet, daß (i) mit einem Anteil von 30 - 70 %, (ii) mit einem Anteil von 15 - 55 %, (iii) mit einem Anteil von 3 - 15 % vorhanden ist und (iv) fehlt.

18. Mischung nach Anspruch 17, dadurch gekennzeichnet, daß (i) mit einem Anteil von 45 - 60 %, (ii) mit einem Anteil von 27 - 40 % und (iii) mit einem Anteil von 7 - 13 % vorhanden ist.

19. Mischung nach Anspruch 15 oder 16, dadurch gekennzeichnet, daß (i) mit einem Anteil von 15 - 35 %, (ii) mit einem Anteil von 15 - 35 %, (iii) mit einem Anteil von 3 - 15 % und (iv) mit einem Anteil von 27 - 52 % vorhanden ist.

20. Mischung nach Anspruch 19, dadurch gekennzeichnet, daß (i) mit einem Anteil von 20 - 30 %, (ii) mit einem Anteil von 20 - 30 %, (iii) mit einem Anteil von 7 - 13 % und (iv) mit einem Anteil von 33 - 47 % vorhanden ist.

## Claims

1. Process for the production of a refractory article made of sintered vitreous silica comprising the steps of casting a fluid mixture of water and of particles of vitreous silica into a porous mould, of allowing most of the water present in the cast mixture to be removed through the pores of said mould so that the cast article in the mould solidifies, of extracting the solidified article from the mould, of drying this article and of sintering the dried article at high temperature, process characterized in that the fluid mixture is prepared as follows:
A) a mixture of grains and particles of fused vitreous silica is prepared by dry mixing:
(i) a moderately coarse particle size fraction of fused vitreous silica, in which at least 80% by weight of the grains are between 40 µm and 1 mm,
(ii) a fine particle size fraction of fused vitreous silica, in which at least 95% by weight of the grains are smaller than 40 µm, the said silica grains (ii) having a BET specific surface of 6 to 9 m²/g and a median diameter, as measured by sedimentation analysis, of 5 to 6 µm;
(iii) substantially spherical particles of a fume silica other than the fume silicas originating from the production of ferrosilicons or of silicon, and
(iv) optionally, at least one particle size fraction of fused vitreous silica which is coarser than fraction (i), the constituents (i), (ii), (iii) and (iv) being employed in the following proportions by weight in relation to the total weight of (i) + (ii) + (iii) + (iv) : (i) 15-70%, (ii) 15-55%, (iii) 3-15% and (iv) 0-52% and the constituents (i), (ii) and (iv) being comprised of a fused vitreous silica containing at least 99% of silica;
B) a fluid mixture is prepared from the mixture obtained in (A) and from a quantity of water representing not more than 10% by weight relative to the total weight of the mixture obtained in (A).

2. Process according to Claim 1, characterized in that said fume silica comprises, by weight, at most 2.5% of ZrO₂, at most 3% of Al₂O₃, at most 0.16% of Fe₂O₃, at most 0.16% of Na₂O, at most 0.07% of K₂O, at most 0.06% of CaO, at most 0.02% of TiO₂, less than 0.015% of C, and SiO₂ for the remainder to 100%.

3. Process according to Claim 1 or 2, characterized in that (i) is used in a proportion of 30-70%, (ii) of 15-55%, (iii) of 3-15%, and (iv) is absent.

4. Process according to Claim 3, characterized in that (i) is used in a proportion of 45-60%, (ii) of 27-40% and (iii) of 7-13%.

5. Process according to Claim 1 or 2, characterized in that (i) is used in a proportion of 15-35%, (ii) of 15-35%, (iii) of 3-15%, and (iv) of 27-52%.

6. Process according to Claim 5, characterized in that (i) is used in a proportion of 20-30%, (ii) of 20-30%, (iii) of 7-13% and (iv) of 33-47%.

7. Process according to Claim 1, 2, 4 or 5, characterized in that the size of grains (iv) does not exceed 10 mm.

8. Process according to any of Claims 1 to 7, characterized in that the fluid mixture also includes a surface-active agent.

9. Refractory material made up of sintered grains of fused vitreous silica, characterized in that it further contains substantially spherical particles of fume silica which are visible in the form of dispersed separate entities in a photomicrograph, said grains of fused vitrous silica containing at least 99% of silica, and said fume silica being a fume silica other than the fume silicas originating from the production of ferrosilicons or of silicon.

10. Material according to Claim 9, characterized in that it contains 3 to 15% by weight of particles of fume silica.

11. Material according to Claim 9 or 10, characterized in that said fume silica comprises, by weight, at most 2.5% of ZrO₂, at most 3% of Al₂O₃, at most 0.16% of Fe₂O₃, at most 0.16% of Na₂O, at most 0.07% of K₂O, at most 0.06% of CaO, at most 0.02% of TiO₂, less than 0.015% of C, and SiO₂ for the remainder to 100%.

12. Material according to Claim 9, 10 or 11, characterized in that it has a content of cristobalite not higher than 2% by weight.

13. Material according to any of Claims 9 to 12, characterized in that it exhibits a bubbling index not higher than 3.

14. Material according to any of Claims 9 to 13, characterized in that it has the following analysis, in % by weight : Al₂O₃ ≤ 1%, ZrO₂ ≤ 1%, Fe₂O₃ ≤ 0.05%, CaO ≤ 0.05 %, Na₂O ≤ 0.05%, others : traces, the remainder to 100% being comprised of SiO₂.

15. Mixture of grains and particles of fused vitreous silica, characterized in that it is produced by dry mixing:
(i) a moderately coarse particle size fraction of fused vitreous silica, in which at least 80% by weight of the grains are between 40 µm and 1 mm,
(ii) a fine particle size fraction of fused vitreous silica, in which at least 95% by weight of the grains are smaller than 40 µm, the said silica grains (ii) having a BET specific surface of 6 to 9 m²/g and a median diameter, as measured by sedimentation analysis, of 5 to 6 µm;
(iii) substantially spherical particles of fume silica other than the fume silicas originating from the production of ferrosilicons or of silicon, and
(iv) optionally, at least one particle size fraction of fused vitreous silica which is coarser than fraction (i), the constituents (i), (ii), (iii) and
(iv) being employed in the following proportions by weight in relation to the total weight of (i) + (ii) + (iii) + (iv) : (i) 15-70%, (ii) 15-55%, (iii) 3-15% and (iv) 0-52% and the constituents (i), (ii) and (iv) being comprised of a fused vitreous silica containing at least 99% of silica.

16. Mixture according to claim 15, characterized in that said fume silica comprises, by weight, at most 2.5% of ZrO₂, at most 3% of Al₂O₃, at most 0.16% of Fe₂O₃, at most 0.16% of Na₂O, at most 0.07% of K₂O, at most 0.06% of CaO, at most 0.02% of TiO₂, less than 0.015% of C, and SiO₂ for the remainder to 100%.

17. Mixture according to Claim 15 or 16, characterized in that (i) is present in a proportion of 30-70%, (ii) of 15-55%, (iii) of 3-15%, and (iv) is absent.

18. Mixture according to Claim 17, characterized in that (i) is present in a proportion of 45-60%, (ii) of 27-40% and (iii) of 7-13%.

19. Mixture according to Claim 15 or 16, characterized in that (i) is present in a proportion of 15-35%, (ii) of 15-35%, (iii) of 3-15%, and (iv) of 27-52%.

20. Process according to Claim 19, characterized in that (i) is present in a proportion of 20-30%, (ii) of 20-30%, (iii) of 7-13% and (iv) of 33-47%.
